# EUROPEAN PATENT APPLICATION

(11) **EP 4 818 077 A1**
(43) Date of publication of application: **07.10.2026**
(21) Application number: 25167567.4
(22) Date of filing: 31.03.2025
(51) Int. Cl.: B65G 1/04, A62C 3/00

(54) **AN AUTOMATED STORAGE AND RETRIEVAL SYSTEM**

(71) Applicant: AutoStore Technology AS, 5578 Nedre Vats (NO)
(72) Inventor: HARALDSEID, Ingunn, 5578 Nedre Vats (NO); AUSTRHEIM, Trond, 5578 Nedre Vats (NO); FJELDHEIM, Ivar, 5578 Nedre Vats (NO)
(74) Representative: Kilburn & Strode LLP

(57) **Abstract**

The disclosure relates to an automated storage and retrieval system comprising a storage frame comprising a plurality of vertical frame members defining columns for storing storage containers; an outlet for releasing a fluid into or around the columns; and a conduit passing underneath at least one vertical frame member of the storage frame to a periphery of the storage frame, the conduit configured to connect to a supply of a fluid and configured to convey the fluid to the outlet. The disclosure also relates to an elongate frame member for such an automated storage and retrieval system. The disclosure also relates to a method of releasing a fluid into an automated storage and retrieval system.

## Description

### TECHNICAL FIELD

The disclosure relates to an automated storage and retrieval system. More particularly, it relates to an automated storage and retrieval system with a storage frame and a conduit for conveying a fluid through the storage frame.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

The dense packing of storage containers enabled by the three-dimensional storage grid provides efficient use of warehouse space. However, the dense packing also limits the amount of space additional infrastructure within the grid, e.g., for providing environment control or safety features.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a portion of a storage system including a conduit for conveying a fluid;
Fig. 6 shows a portion of a storage system with a cross-sectional view of an elongate frame member for conveying a fluid;
Fig. 7 shows a portion of a storage system with a storage container positioned in a column;
Fig. 8 shows an end portion of an elongate frame member for conveying a fluid; and
Fig. 9 shows a method of releasing a fluid into an automated storage and retrieval system.

### DETAILED DESCRIPTION

In overview, the disclosure relates to an automated storage and retrieval system having a conduit configured to convey a fluid, such as low-Oxygen air, from a fluid supply to an outlet for releasing the fluid. Releasing the fluid into or around columns of a storage frame of the system (also referred to herein as 'a frame') means that the fluid spreads around the storage containers.

If the fluid is low-Oxygen air or an inert gas, a low-Oxygen environment is provided which prevents or inhibits a fire from starting or spreading, or slows the rate of spreading. The Oxygen level (e.g. Oxygen concentration by mole fraction as a percentage) in the storage frame can be monitored and the release of the low-Oxygen air (or inert gas) can be controlled according to the monitoring, to maintain a desired Oxygen level in the storage frame. By releasing the fluid at a base of the storage frame (at or near the level of the floor on which the storage frame rests), a lighter-than-air fluid (e.g. low-Oxygen and Nitrogen-enriched air) will rise through the storage frame and around storage containers in the storage columns.

If the conduit passes underneath one or more of the vertical frame members, which define columns in the storage frame, the fluid is supplied to the interior of the storage frame while maintaining the storage space for storage containers. In contrast, either using false floors for running piping under the storage columns or having empty storage columns to run piping vertically through the storage frame would reduce the useable volume of storage frame. Therefore, having the conduit pass underneath the vertical frame members, such as in an elongate frame member (also referred to as a floor rail) provides a space-efficient way to supply a fluid around the storage frame. The elongate frame member can be designed to facilitate the arrangement with the conduit passing underneath the vertical frame members by: having a connection portion for connecting a vertical frame member on top of the elongate frame member; and/or being configured to support the vertical frame member.

### Automated storage and retrieval system overview

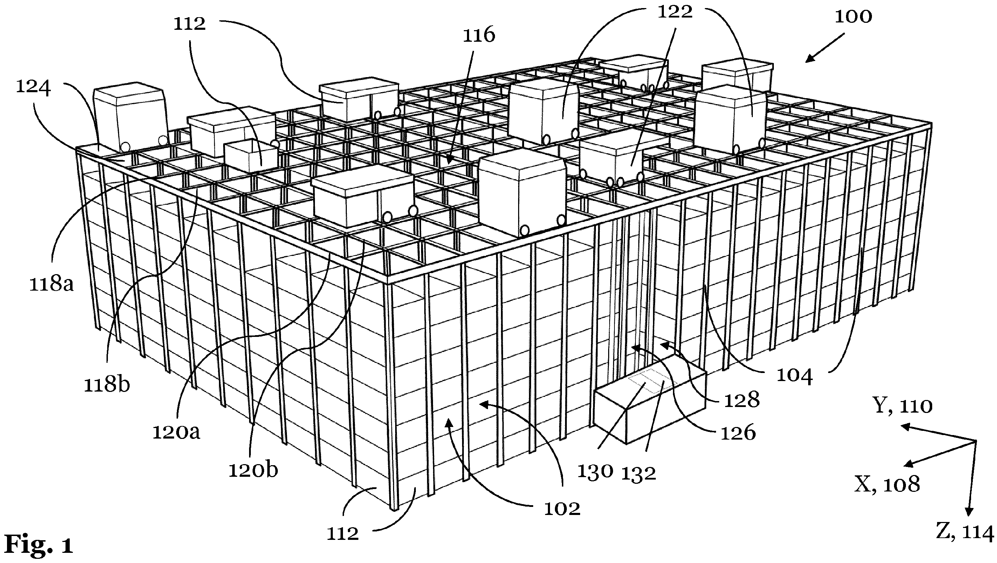

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts, or robots.

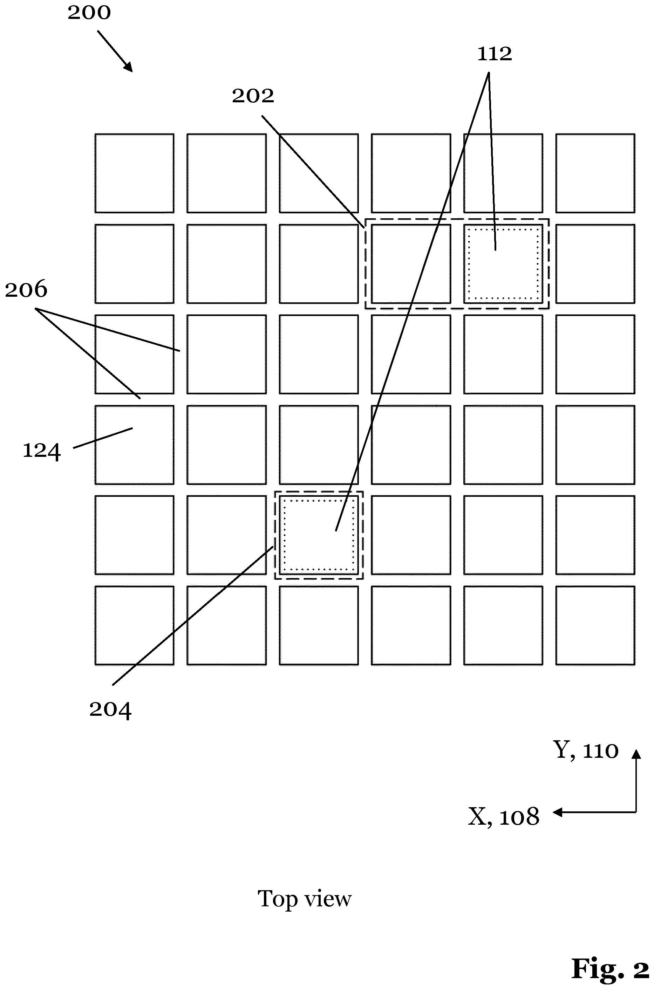

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

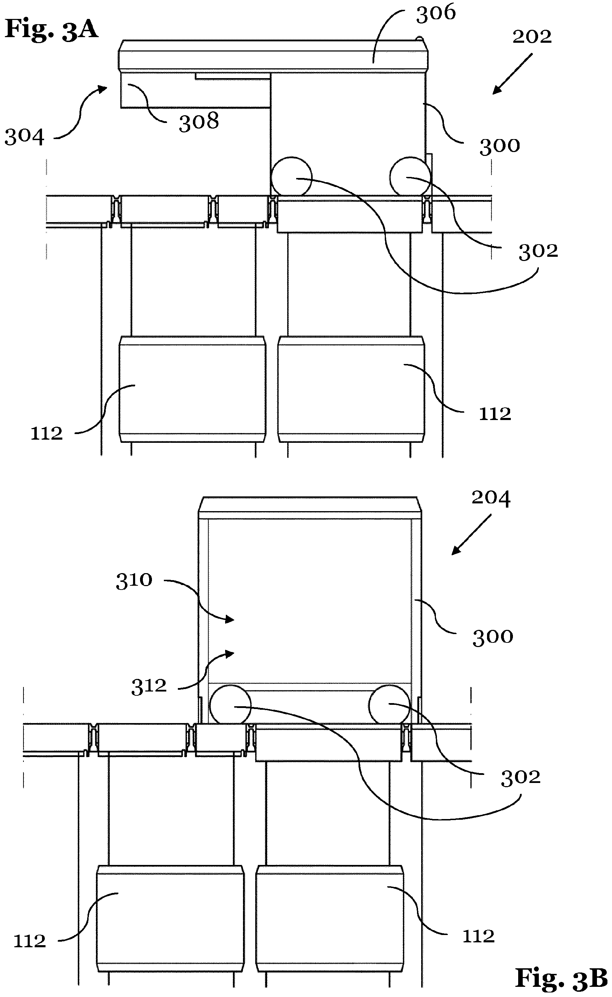

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

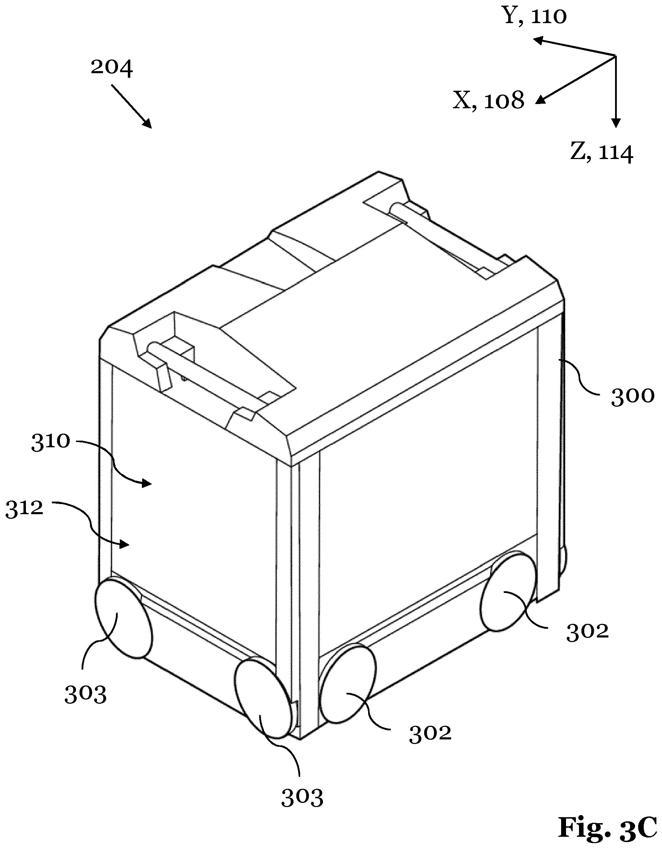

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

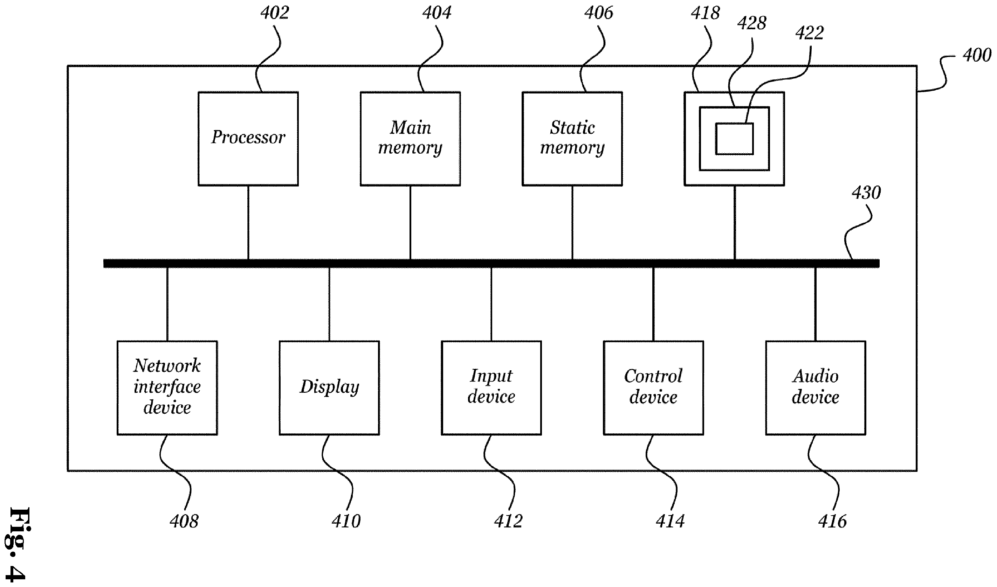

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements

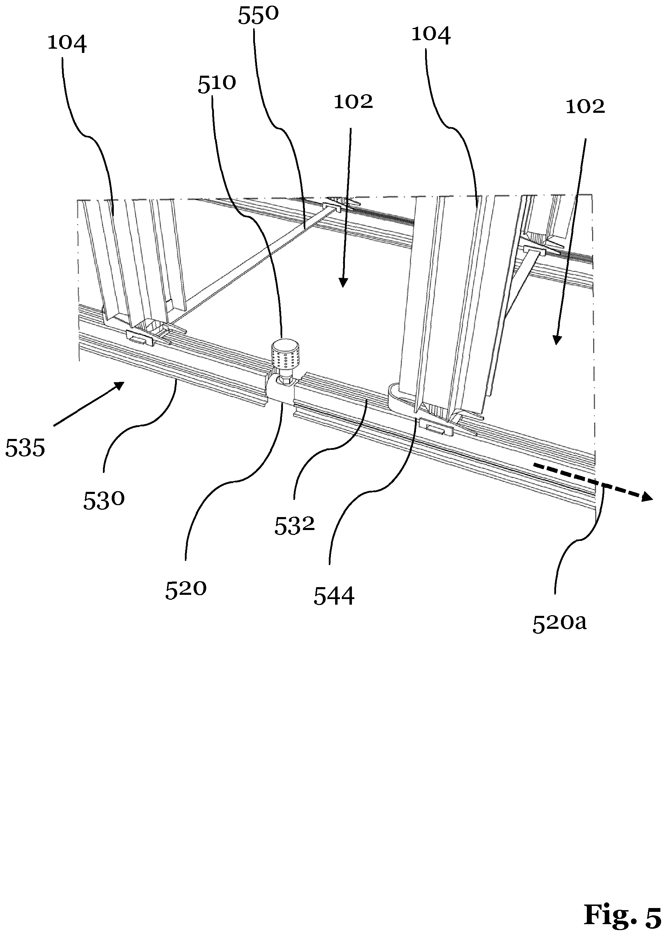

With reference to Fig. 5, an automated storage and retrieval system has an outlet 510 for releasing a fluid, such as low-Oxygen air, into or around storage columns of the storage frame. As explained above with reference to Fig. 1 and Fig. 2, the storage frame comprises a plurality of vertical frame members 104 forming a grid of storage columns 102 for receiving bins. The automated storage and retrieval system may otherwise have any of the features as described above with reference to Fig. 1 to Fig. 4.

The base 535 of the storage frame is formed by a plurality of elongate frame members 530, in the form of floor rails, that are arranged parallel to the X direction 520a. Each elongate frame member is dimensionally elongate, i.e., the frame member is long in relation to its width. In other words, the elongate frame member is longer in a longitudinal direction than it is wide in a transverse direction perpendicular to the longitudinal direction. The longitudinal direction may be considered an elongate or long direction and may extend parallel to the longitudinal or elongate axis. Similarly, the transverse direction may be any dimension in a direction extending radially from the longitudinal or elongate axis, for instance in a plane perpendicular to the longitudinal or elongate axis.

The elongate frame members 530 are spaced apart by spacers 550 that are arranged perpendicular to the X direction across the base 535 (i.e., in the Y direction). The spacers 550 are used as an alignment and spacing guide during assembly of the system. The elongate frame members 530 and spacers 550 form a base grid having the same repeat pattern as the grid at the top of the storage frame defined by rails 118, 120 as explained above with reference to Fig. 1. As such, the elongate frame members 530 and spacers 550 define a periphery at the lower end of the storage columns 102. In other words, the elongate frame member 530 runs along a boundary between adjacent storage columns 102.

The elongate frame members 530 support the vertical frame members 104. Accordingly, the elongate frame members have a structure and composition suitable to support the weight of the vertical frame members, the rails at the top of the storage frame and robots on the rails. The elongate frame members 530 may be metal, for example extruded aluminium, or made from any other material that can be used to make the vertical members of the storage frame.

At a lower end of each vertical frame members 104 there is an adjustable foot 544. The adjustable foot 544 sits on the elongate frame member 530 and connects to a connection portion 532 on an upper surface of the elongate frame member 530. The connection portion 532 comprises two grooves running along the length of the upper surface of the elongate frame member 530 for receiving the adjustable foot 544.

The elongate frame members 530 each have an inner cavity running along a length of the elongate frame members in the X direction 520a. This makes up part of the conduit 520 that conveys the fluid from a fluid supply, e.g., an Oxygen-depletion device, to the outlet 510.

The conduit 520 may have a polygonal or circular transverse cross section. Alternatively, the cross section may take any other regular or irregular shape. In general, the cross section of the conduit 520 may conform to the external cross section of the elongate frame member 530 for ease of manufacturing and to maximise fluid volume in the conduit 520. The conduit 520 may extend throughout a portion, or the entire elongate length, of the elongate frame member 530.

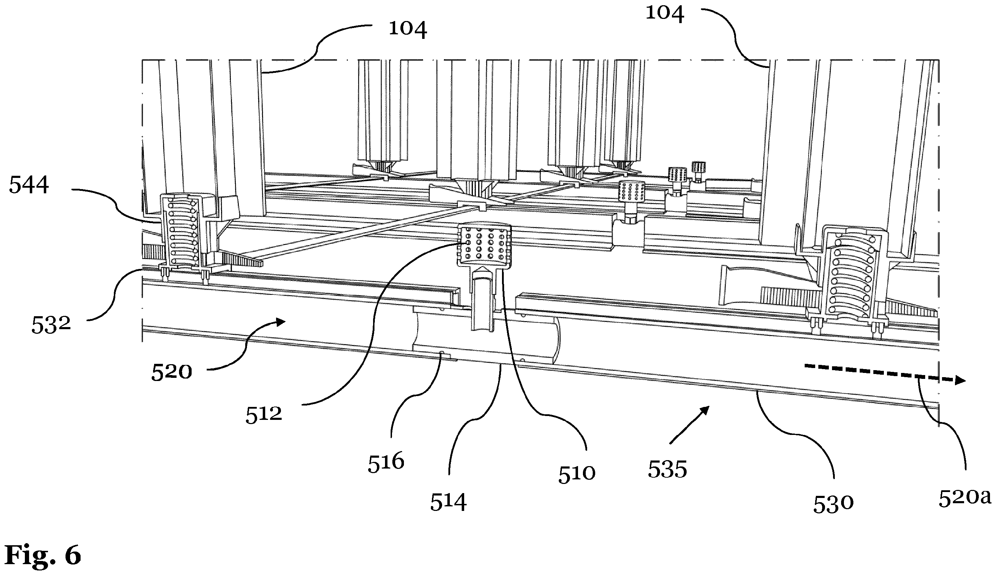

With reference to Fig. 6, the conduit 520 comprises an outlet connection portion 514 having an internal cavity passing therethrough. The outlet connection portion forms a sealed connection with two elongate frame members 530, one on either side of the outlet connection portion 514. The sealed connections are provided by a respective O-ring 516 on each side. The internal side of the outlet 510 opens into the conduit inside the outlet connection portion 514, creating a fluid pathway from the conduit to the external side of the outlet 510 via a plurality of orifices 512 arranged on an outlet head. The outlet head is cylindrical with vertical columns of five orifices 512 spaced around the circumference of the cylindrical head.

With reference to Fig. 6, the outlet head is provided as a single piece with the outlet connection portion 514. In alternative arrangements, the outlet head is a separate piece to the outlet connection portion 514 and connected by a sealed connection with the outlet head. In other arrangements, the outlet is formed directly on the elongate frame member 530, either as an outlet head or as an orifice in an external wall of the elongate frame member.

Although only a single outlet 510 is shown on each line of aligned elongate frame members 530, an outlet 510 may be provided at a plurality of positions along the aligned elongate frame members. The positions of outlets 510 in the X direction 520a may be different for different lines of aligned elongate frame members (the different lines being spaced apart in the Y direction across the base 535 of the storage frame).

In some examples, the automated storage and retrieval system has one or more sensor positioned in the storage frame to monitor the application of the fluid in or around the storage columns. If the supplied fluid is a low-Oxygen gas, e.g., Oxygen-depleted air, the one or more sensors include an Oxygen sensor such as an electrochemical Oxygen sensor or an optical Oxygen sensor. The sensors may be positioned at predetermined locations in the storage frame, e.g., spread out in the X-direction, Y-direction, and Z-direction. The sensors continuously or periodically monitor the Oxygen level in the ambient air of the storage frame and send a report signal to a sensor control system. The sensors may send a report signal periodically or in response to a particular condition being met. The report signal may contain the Oxygen level measurement data, or a data otherwise summarising the conditions. In this way, the sensor control system can monitor the Oxygen levels throughout the storage frame (or at least have a representative measure of the Oxygen levels throughout the storage frame) and control the supply of the low-Oxygen gas to the storage frame through the conduit 520 and outlet 510.

In some examples, outlet 510 may include an actuatable valve arranged to selectively isolate the conduit 520 from the environment surrounding the elongate frame member 530. The valve therefore allows selective delivery of fluid from the conduit 520 into the automated storage and retrieval system. The actuatable valve may comprise a passive actuator (e.g., a passive actuation valve) arranged to actuate automatically in response to an actuation condition. For instance, when the fluid is Oxygen-depleted air, the actuation condition may be a condition indicative of Oxygen levels in the system. Alternatively, the actuatable valve may comprise an active actuator, arranged to actuate in response to a signal from a control system. This signal may originate from a sensor control system of the automated storage and retrieval system.

In some examples, the storage frame, or the whole automated storage and retrieval system is sealed so that the fluid supplied by the outlet will be substantially retained in the storage frame. The sealing of the storage frame can be achieved by walls, membranes, sealants, etc., combinations thereof, or any suitable physical barrier for suppressing escape of fluid from inside the storage frame to outside the storage frame. The sealed section may include the top grid of the storage frame and robots moving on the rail system. If robots need to enter or leave the sealed section, a door, series of doors, or airlock may be provided to limit the escape of the fluid when a robot enters or leaves. Likewise, in examples having a transfer column or port is provided within or adjacent the sealed section, the seal may be provided either at the top of the transfer column or at an entry to the port.

In examples having a plurality of sealed sections of the storage frame, e.g., for maintaining different conditions within the different sealed sections, a door, a series of doors, an airlock, etc., or combinations thereof, are provided between adjacent sealed sections to limit the flow of fluid between sections. In examples having sealed sections, each seal section comprises one or more outlets 510 and one or more conduits 520 for conveying the fluid from a fluid supply to the outlets 510. The supply of the fluid to different sealed sections of the storage frame, or different lines of elongate frame members 530 may be controlled independently and/or may be controlled collectively. The control of the supply to each sealed section or part of the storage frame may be controlled by a sensor control system in response to one or more measurements from sensors in that respective sealed section or part of the storage frame.

In some examples, the fluid supply is arranged to supply pressurised fluid into the lines of elongate members 530. For instance, the fluid supply may comprise a pre-pressurised cannister. Alternatively, the fluid supply may include a pressuriser, arranged to selectively pressurise the fluid. Accordingly, the fluid supply may be arranged to introduce pressurised fluid into the conduit of each elongate frame member 530. By supplying pressurised fluid into the lines of elongate frame members 530, actuatable valves in the outlets of the conduits need not propel the fluid on actuation. Rather, the actuatable valves need only open for fluid to deliver into the automated storage and retrieval system. Alternatively, in some arrangements, actuatable values at the outlets are not needed and the supply can be controlled by supply of the fluid to the elongate frame members 530.

In some examples, at least one master valve may be provided in the fluid supply connected to the elongate frame members 530. The master valves are actuatable to allow selective flow of fluid from the fluid supply into the conduits of elongate frame members. In some examples, the master valves may be provided instead of the actuatable valves in the outlets. Accordingly, the master valves provide central actuation, which, when actuated or triggered, supplies the fluid to the conduits. One elongate frame member 530 may deliver fluid into multiple storage columns 102 via outlets 510.

In examples wherein the fluid is an inert gas, the fluid supply may be a pressurised cannister of the inert gas, such as Nitrogen gas. The fluid supply may comprise an actuatable valve for controlling the flow of the inert gas, e.g., in response to receiving a control signal from a control system, such as the sensor control system. In examples wherein the fluid is low-Oxygen gas (e.g., Oxygen-depleted air or Nitrogen-enriched air), the fluid supply may comprise a supply inlet for receiving ambient air in addition to the pressurised cannister of the inert gas.

In some examples, the internal diameter of the cavity inside the elongate frame member is 35 mm.

In some examples, the pressure of the fluid in the conduit is 1.2 bar during release of the fluid.

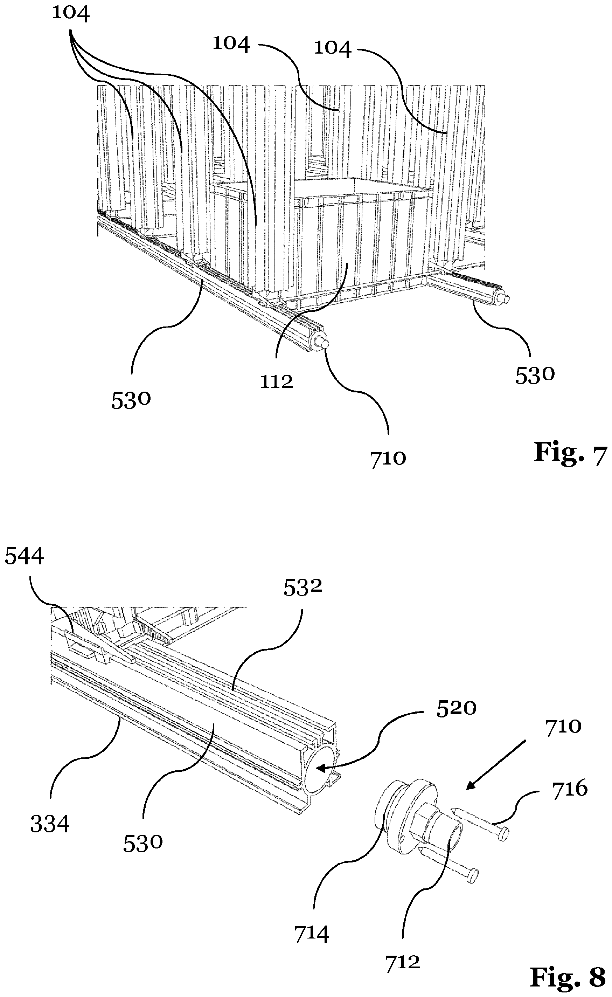

With reference to Fig. 7, at the end of each line of elongate frame members 530 there is a connector 710 for connecting the conduit 520 to the fluid supply, either directly or via one or more supply pipes, connections, manifolds, etc., or combinations thereof.

A first bin 112 fits in the storage column between adjacent parallel elongate frame members 530 and rests on the same floor level as the base 535 of the storage frame rests. The storage columns 102 extend below the lower extent of the vertical frame members 104. The storage columns extend to the level of a flat surface 334 of each elongate frame member 530 on which that elongate frame member 530 rests. By having the conduit 520 flow through the elongate frame members 530 on which the vertical frame members 104 are supported, the fluid is supplied into or around the columns of the storage frame without reducing the storage volume of the storage columns 102. More bins can be positioned on and supported by the first bin 112 such that a stack of bins 112 is provided in each storage column 102.

Supplying fluid into or around the columns can also be referred to as supplying fluid to an internal space within the periphery of the storage frame, the internal space comprising the columns and the space between the columns.

With reference to Fig. 8, the connector 710 at the end of each line of elongate frame members 530, at a periphery of the storage frame, connects the conduit 520 to the fluid supply. The connector 710 has a portion that is inserted into an opening of the conduit 520 and has an O-ring 714 to form a sealed connection to the conduit. The connector can be secured to the elongate frame member 530 via screws 716 or pins passing through the connector 710 and into corresponding holes or grooves in the elongate frame member 530. The connector 710 comprises an inlet 712 for receiving the fluid from one or more supply pipes, connections, manifolds, etc., or combinations thereof.

In other arrangements, the connector 710 may connect to the conduit 520, and/or the inlet 510 connect to the fluid supply, via a screw thread, a pressure fitting, a mechanical lock, a clasp, a friction fitting, etc., or some combination thereof. In some examples, each connector 710 has a valve for selectively controlling the flow of the fluid into the conduit 520 of the corresponding elongate frame member 530 from the fluid supply. The valve or valves may be controlled by a control system, such as the sensor control system. The control system and/or the sensor control system may be the processing system 400 as described above with reference to Fig. 4, or a part thereof.

The one or more valves can be positioned at any location along the conduits, such as at an inlet 712, or at an outlet manifold of the fluid supply. The conduits 520 are routed into the elongate frame members 530 along the base 535 of the storage frame, which are each configured to deliver the fluid to one or more storage columns along a row in the storage frame. It will be appreciated that, in any of the examples herein, the specific configuration of the conduits 520 is customisable within the 2D periphery the base of the storage frame, such that conduits 520 may each be directed to any particular region of the storage frame.

The one or more valves may actuate independently of one another. As such, if a condition indicating that Oxygen level in the storage frame is above a threshold condition, e.g., above 13%, then the corresponding valve for that region of the storage frame is actuated, and the low-Oxygen fluid is delivered. The valves therefore direct the fluid to regions of the storage grid where the Oxygen level has exceeded the desired range.

With reference to Fig. 8, the cross-sectional profile of each elongate frame member 530 defines a cavity running in a longitudinal direction along the length of the elongate frame member. The cross-sectional profile also comprises one or more flat surface 334, in the form of a flange on either side of the elongate frame member running along the length of the elongate frame member and on which the elongate frame member rests. On a side of the elongate frame member 530 opposite the flat surface 534, the cross-sectional profile of the elongate frame member defines a connection portion 532, in the form of grooves running in a longitudinal direction along the length of the elongate frame member, onto which the vertical frame member 104 is configured to connect. The elongate frame member 530 may also comprise one or more strengthening braces or flanges to provide compressive strength for supporting the weight of the storage frame. In some examples, the elongate storage frame member 530 has a rectangular cross-sectional perimeter.

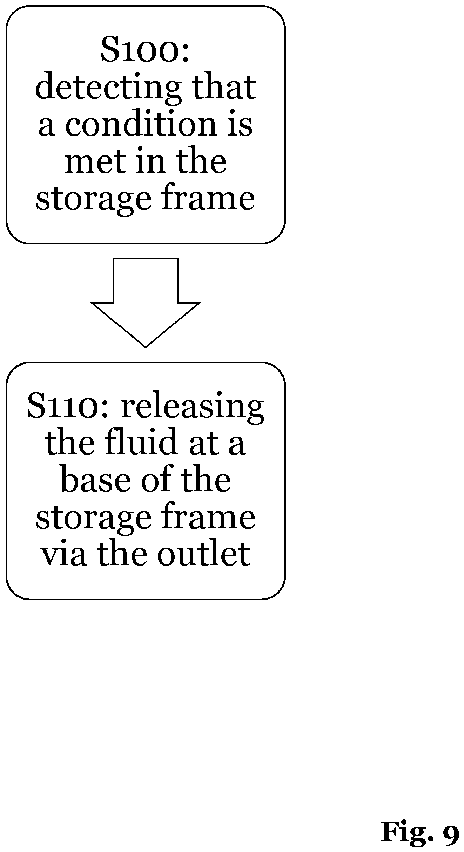

With reference to Fig. 9, a method of releasing a fluid into an automated storage and retrieval system, such as any automated storage and retrieval system as described above with reference to Fig. 5 to Fig. 8, comprises: detecting S100 that a condition is met in the storage frame and releasing S110 the fluid at a base of the storage frame via the outlet in response to detecting that the condition is met.

In some examples, the condition is that an Oxygen concentration in the storage frame has increased above a threshold concentration, e.g. the Oxygen concentration measured at one or more sensors in the storage frame has made a measurement of more than 13% Oxygen. Unless stated otherwise herein, the percentage concentration of Oxygen is measured according to mole fraction, although any corresponding measurement can be used by sensor corresponding to Oxygen concentration.

In some examples, the detecting S100 comprises receiving, at a sensor control system such a processing system 400 as described above with reference to Fig. 4, one or measurements from one or more sensors positioned in the storage frame. The locations of the sensors may be known to the system, so that the sensor control system can control the corresponding valve or supply to convey fluid along the elongate frame member 530 below the sensor having an Oxygen concentration above the threshold. The corresponding outlet(s) 510 along the line of selected elongate frame members 530 will therefore release the low-Oxygen gas below the sensor until the sensor measures that the Oxygen concentration is below the threshold concentration, i.e., the release condition is no longer met. In some examples, the outlets 510 have controllable valves so that finer control can be achieved by the sensor control system, by choosing particular outlets 510 along the line of selected elongate frame members 530 to release the low-Oxygen gas.

The sensor control system may compile a plurality of sensor measurement readings to create a parameter map of the storage frame. The parameter map indicates the readings across the storage frame from a plurality of sensors and, optionally, extrapolated values for Oxygen concentrations between sensors.

In some examples, the sensors are positioned approximately at the midpoint of the vertical frame members 104, or some other intermediate point up the vertical frame members 104. This avoids misrepresentative measurements from sensors only at the top of the storage frame, where the low-Oxygen air (having a lower density than ambient air) may pool and so have an unrepresentatively low concentration. It also avoids misrepresentative measurements from sensors only at the bottom of the storage frame, near the outlets where the low-Oxygen air is supplied so have an unrepresentatively low concentration. In general, using a plurality of sensors positioned at a range of heights within the storage frame provides a more accurate representation of the Oxygen levels within the storage frame. Likewise, spreading out the sensors in the X and Y directions also increases the accuracy and precision of the variation of Oxygen concentration across the storage frame.

In some examples, instead of detection of Oxygen levels in the storage frame, the detected condition is the presence of smoke by one or more smoke detectors. In these examples, the condition may be a detection of greater than: 0.01% obscuration per metre (obs/m); 0.1% obs/m; 0.5% obs/m; 1% obs/m; 2% obs/m; 3% obs/m; 5% obs/m; 10% obs/m; 15% obs/m; or 20% obs/m. Percentage obscuration per metre is a standard unit of measurement for smoke levels. For example, a 10% obs/m measurement means that smoke obscures 10% of light per metre of the smoke that light passes through.

The condition may be that a temperature in the storage frame has increased above a threshold temperature. The threshold temperature is 40°C, 45°C, 50°C, 55°C, or 60°C.

The releasing S110 may comprise turning on the flow of fluid to flood the storage space of the system with the fluid, e.g., in response to detecting conditions which indicate that there is a fire in the system. The releasing S110 may continue until a user manual overrides the release, e.g., when a firefighter has confirmed that the fire is extinguished or otherwise under control. Alternatively, the releasing S110 may continue until the supply of fluid has been exhausted.

The releasing S110 may comprise turning on the flow of fluid for a predetermined amount of time, which may be chosen by the control system according to the amount of deviation of the sensor measurement from a desired range. Alternatively, the releasing may comprise turning on the flow of fluid until a new measurement is received from the relevant sensors indicating that the condition is no longer met, and then control the supply to turn off the flow of fluid. For example, if the system is designed to maintain an Oxygen level of between 11% and 13% around the storage columns and storage containers in the storage columns, the system may detect a reading of 14% Oxygen level a sensor and, in response, release low-Oxygen air below that sensor for 10 seconds. If the sensor is still measuring more than 13% Oxygen level, a further 10 second release is provided, and so on until the Oxygen level is below 13%, or 11% according to the algorithm chosen for the specific implementation. The specific condition to trigger the release, the specific parameters of the release, and the condition to cease the release can vary between implementations in accordance with the desired protocol and design of the system and method.

Although particular implementations of the disclosure have been described above with reference to Fig. 5 to Fig. 9, alternative implementations are also possible, some examples of which are explained below.

In some implementations, not all rows of vertical frame members arranged in a line in the X direction sit on the elongate frame members, that is, in some implementations some vertical frame members rest directly on the floor under the storage frame. In some implementations, adjustable feet at the bottom of the vertical frame members are not required and the body of the vertical frame members rest directly on the elongate frame members or on the floor.

In some implementations, not all lines of elongate frame members have outlets. In some implementations, the outlets may be formed directly in the elongate frame member instead of via an outlet connection portion.

In some implementations, spacers to space out the vertical frame members in a direction perpendicular to the elongate frame members are not required. In some implementations, the elongate frame members are arranged in the Y direction instead of the X direction as shown in Fig. 5. In some implementations, the elongate frame members are arranged in both X and Y directions and meet at conduit branches at corners of columns.

In some implementations, the conduit passes through a lower portion of a vertical frame member, e.g., through a hole. In such implementations, the upper portion the conduit passes underneath the upper portion of the vertical frame member.

In some implementations, the connection portion of the elongate frame members is different to the example shown in Fig. 5 to Fig. 8, for example, comprising a hook, lip, hole, protrusion, loop, etc. or any combination thereof suitable for a vertical frame member to connect to.

In some implementations, the cross-sectional shape and features of the elongate frame member is different to the example shown in Fig. 8.

In some implementations, one or more outlets are provided by the vertical frame members, wherein the conduit extends up the vertical frame members from the base of the storage frame to the outlet.

Although the example illustrated in Fig. 5 to Fig. 8 shows a particular storage column shape and number of columns in the grid in the X and Y directions, the features described herein also can be implemented into automated storage and retrieval systems having different column shapes and different numbers of columns in X and Y directions.

Although the specific examples provided use a fluid of low-Oxygen air, in other examples the fluid may be any fire suppressant, i.e., any agent (liquid, gas, powder, or otherwise) suitable for use in a fire suppression system, or any environmental composition, suitable for use in vertical farming. These categories are not mutually exclusive, for instance, the environmental composition may also be a fire suppressant. Where the fluid is a fire suppressant, the fluid may comprise at least one of: a dry chemical fire suppressant, such as monoammonium phosphate, sodium bicarbonate, potassium bicarbonate, or potassium chloride; a foam fire suppressant, such as aqueous film-forming foam, film-forming fluoroprotein, or compressed air foam; a wet chemical fire suppressant, such as potassium acetate, potassium carbonate, or potassium citrate; a clean fire suppressant (or an inert gas fire suppressant), such as halons, carbon dioxide or inert gas; a dry powder fire suppressant, such as sodium chloride; a condensed aerosol fire suppressant; water; and/or any other suitable fire suppressant. Dry chemical fire suppressant, foam fire suppressant, and dry powder fire suppressant smother fires by forming a barrier between the fuel of the fire and the source of oxygen in the atmosphere. Wet chemical fire suppressant similarly forms a soapy film over the fuel. Clean, or gaseous, fire suppressant and condensed aerosol fire suppressant displace oxygen in the atmosphere surrounding a fire with carbon dioxide or other inert gasses. Water, when used as a fire suppressant, cools burning material.

In some implementations, the fluid is released in response to detecting a fire in the storage frame, e.g., by a smoke detector and/or a heat detector.

In some implementations, the fluid is released to maintain a target range of Oxygen concentration in the storage frame. For example, the fluid may be released in response to detecting that an Oxygen concentration in the storage frame has exceeded a target range.

Implementations of the disclosure have been described in the above by way of example with reference to the drawings. The present disclosure will now be described in general terms below. The word "may" is used to refer to a feature that is optional, i.e., in some implementations of the disclosure, the feature is present, and in some implementations of the disclosure, the feature is not present. Each possible combination of any features described below with any features described above also forms part of the disclosure.

The present disclosure provides an automated storage and retrieval system comprising: a storage frame; an outlet for releasing a fluid into or around the columns; and a conduit configured to connect to a supply of a fluid and configured to convey the fluid to the outlet. The storage frame comprises a plurality of vertical frame members defining columns for storing storage containers.

The conduit may pass underneath at least one vertical frame member of the storage frame to a periphery of the storage frame. In other words, the conduit crosses a footprint of the at least one vertical frame member when viewed from above the vertical frame member. The conduit passing underneath the at least one vertical frame member maintains the useable storage space by running under the vertical frame members rather than through the storage columns.

The outlet may be positioned to release the fluid at a base of the storage frame. The base of the storage frame can be defined as the part or parts of the storage frame that rest on the floor under the storage frame and that support the rest of the storage frame. The outlet may be positioned such that the fluid is released no more than 1 metre, 50 centimetres, 30 centimetres, 20 centimetres, 10 centimetres, or 5 centimetres, above the floor on which the storage frame rests. This arrangement fills the storage frame with the fluid from the bottom upwards, which may be particularly effective for examples where the fluid is a lighter-than-air gas.

The outlet may be formed on an elongate frame member, wherein the conduit comprises a cavity of the elongate frame member. The elongate frame member may be a floor rail. The elongate frame member may support the at least one vertical frame member.

The elongate frame member may comprise a connection portion connecting the elongate frame member to the at least one vertical frame member.

The at least one vertical frame member may comprise an adjustable foot, wherein the adjustable foot is connected to the connection portion, wherein the adjustable foot is configured to adjust the height of the at least one vertical frame member.

The conduit may comprise a cavity of the elongate frame member.

The elongate frame member may have a flat surface on at least one side of the elongate frame member or have flat surfaces on at least two sides of the elongate frame member.

The outlet may be positioned between adjacent vertical frame members of the at least one vertical frame members. The outlet may be not on the at least one vertical frame member. The outlet may be not formed by the at least vertical frame member. The outlet may be positioned away from any corner of the storage column.

The vertical frame members may extend from the base of the storage frame to the top of the storage frame.

The conduit may run along a boundary between adjacent columns of the storage frame. Accordingly, the conduit does not limit the storage space of the storage columns. The outlet may be positioned on a boundary between adjacent columns of the storage frame. The conduit may have a width less than or equal to the width of the at least one vertical frame member. The conduit may run in a straight line between adjacent vertical frame members. The boundary between adjacent columns may be a space between adjacent columns that is not configured to receive storage containers.

The outlet may be configured to release the fluid at a position between adjacent columns of the storage frame. This promotes circulation of the fluid as the spaces between columns, when loaded with storage containers, acts as flues for the fluid.

The system may comprise a plurality of outlets, including the outlet, distributed across the base of the storage frame with at least one outlet per 150 m².

The fluid may be a gas.

The fluid may be less dense than air. The fluid being less dense than air means that the fluid will rise up through air having a normal atmospheric composition. Less dense can be defined as one mole of the fluid occupying a greater volume than one mole of atmospheric air.

The fluid may be a fire-supressing fluid. The fluid may be low-Oxygen air, i.e., Oxygen depleted air having less Oxygen gas than is found in atmospheric air (as defined at sea level or another reference elevation). The fluid may be Nitrogen-enriched air (having more Nitrogen gas than is found in atmospheric air). The fluid may be water. The fluid may be an inert gas, such as Nitrogen gas.

The fluid may be a gas having a composition comprising: no more than 21% Oxygen; no more than 18% Oxygen; no more than 15% Oxygen; no more than 13% Oxygen; no more than 11% Oxygen; no more than 10% Oxygen; no more than 8% Oxygen; no more than 5% Oxygen; no more than 2% Oxygen; or no more than 1% Oxygen.

The storage frame may comprise walls (i.e., one or more walls) to seal at least a portion of the storage frame into one or more sealed sections. The dividing the storage frame into sealed sections maintains the fluid in the sealed section into which it is released. At least one of the sealed sections comprises the outlet, which may be one of a plurality of outlets.

The automated storage and retrieval system may comprise one or more sensors configured to detect the presence of the fluid in the storage frame. The sensors provide a way to monitor the levels of the fluid in the storage frame and control the release of the fluid in response to the level of the fluid. For example, a low-Oxygen environment can be maintained to within a desired range of Oxygen level. The one or more sensors may comprise a plurality of sensors distributed through the storage frame. The sensors may be Oxygen sensors; gas composition sensors; heat sensors; smoke sensors; or a combination of one or more thereof.

The one or more sensors may be configured to measure a proportion of the gas at the one or more sensors that has the same composition as the fluid.

The one or more sensors may be configured to report detection of presence of the fluid to a control system of the automated storage and retrieval system. The one or more sensors may be configured to report a measurement of the fluid to a control system of the automated storage and retrieval system.

The conduit may be such that the conduit does not extend into the at least one vertical frame member.

The present disclosure provides an elongate frame member for an automated storage and retrieval system comprising a storage frame, the storage frame comprising a plurality of vertical frame members defining a plurality of columns for storing storage containers, the elongate frame member comprising: an outlet for releasing a fluid into or around the columns; and a conduit configured to connect to a fluid supply and convey the fluid from the fluid supply to the outlet.

The elongate frame member may comprise a connection portion configured to connect the elongate frame member to a vertical frame member of the automated storage and retrieval system such that the conduit passes underneath the vertical frame member.

The elongate frame member may have any of the features of an elongate frame member as described above.

The present disclosure provides a method of releasing a fluid into an automated storage and retrieval system, the automated storage and retrieval system comprising: a storage frame comprising a plurality of vertical frame members defining columns for storing storage containers; an outlet for releasing a fluid in or around the columns; and a conduit configured to connect to a supply of a fluid and configured to convey the fluid to the outlet.

The method may comprise detecting that a condition is met in the storage frame; and releasing the fluid via the outlet in response to detecting that the condition is met.

The method may comprise detecting that a condition is met in the storage frame; and releasing the fluid at a base of the storage frame via the outlet in response to detecting that the condition is met.

The method may be for releasing the fluid into an automated storage and retrieval system is according to any of the features described above.

The condition may be that an Oxygen concentration in the storage frame has increased above a threshold concentration. The threshold concentration may be 1% Oxygen; 2% Oxygen; 5% Oxygen; 8% Oxygen; 11% Oxygen; 10% Oxygen; 13% Oxygen; 15% Oxygen; 18% Oxygen; or 20% Oxygen.

The condition may be the presence of smoke. The condition may be a detection of greater than: 0.01% obscuration per metre (obs/m); 0.1% obs/m; 0.5% obs/m; 1% obs/m; 2% obs/m; 3% obs/m; 5% obs/m; 10% obs/m; 15% obs/m; or 20% obs/m.

The condition may be that a temperature in the storage frame has increased above a threshold temperature. The threshold temperature is 40°C, 45°C, 50°C, 55°C, or 60°C.

The present disclosure provides a computer-readable medium comprising instructions which, when executed by a processor of a device, cause the device to perform the method according to the any of the features described above. The computer-readable medium may be non-transitory. The computer-readable medium may be tangible.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. An automated storage and retrieval system comprising:
a storage frame comprising a plurality of vertical frame members defining columns for storing storage containers;
an outlet for releasing a fluid into or around the columns; and
a conduit passing underneath at least one vertical frame member of the storage frame to a periphery of the storage frame, the conduit configured to connect to a supply of a fluid and configured to convey the fluid to the outlet.

2. The automated storage and retrieval system according to claim 1, wherein outlet is positioned to release the fluid at a base of the storage frame.

3. The automated storage and retrieval system according to claim 1 or 2, wherein the outlet is formed on an elongate frame member, wherein the conduit comprises a cavity of the elongate frame member.

4. The automated storage and retrieval system according to claim 3, wherein the elongate frame member supports the at least one vertical frame member.

5. The automated storage and retrieval system according to any preceding claim, wherein the conduit runs along a boundary between adjacent columns of the storage frame.

6. The automated storage and retrieval system according to any preceding claim, wherein the fluid is less dense than air.

7. The automated storage and retrieval system according to any preceding claim, wherein the fluid is a gas having a composition comprising: no more than 21% Oxygen; no more than 18% Oxygen; no more than 15% Oxygen; no more than 13% Oxygen; no more than 11% Oxygen; no more than 10% Oxygen; no more than 8% Oxygen; no more than 5% Oxygen; no more than 2% Oxygen; or no more than 1% Oxygen.

8. The automated storage and retrieval system according to any preceding claim, wherein the storage frame comprises walls to seal at least a portion of the storage frame into one or more sealed sections.

9. The automated storage and retrieval system according to any preceding claim, comprising one or more sensors configured to detect the presence of the fluid in the storage frame.

10. An elongate frame member for an automated storage and retrieval system comprising a storage frame, the storage frame comprising a plurality of vertical frame members defining a plurality of columns for storing storage containers, the elongate frame member comprising:
an outlet for releasing a fluid into or around the plurality of columns;
a conduit configured to connect to a fluid supply and convey the fluid from the fluid supply to the outlet; and
a connection portion configured to connect the elongate frame member to a vertical frame member of the automated storage and retrieval system such that the conduit passes underneath the vertical frame member.

11. An elongate frame member according to claim 10, wherein the elongate frame member is configured to support the vertical frame member of the automated storage and retrieval system.

12. A method of releasing a fluid into an automated storage and retrieval system, the automated storage and retrieval system comprising:
a storage frame comprising a plurality of vertical frame members defining columns for storing storage containers;
an outlet for releasing a fluid into or around the columns; and
a conduit configured to connect to a supply of a fluid and configured to convey the fluid to the outlet,
the method comprising:
detecting that a condition is met in the storage frame; and
releasing the fluid at a base of the storage frame via the outlet in response to detecting that the condition is met.

13. A method according to claim 12, wherein the automated storage and retrieval system is according to any of claims 1 to 9.

14. A method according to claim 12 or 13, wherein the condition is that an Oxygen concentration in the storage frame has increased above a threshold concentration.

15. A computer-readable medium comprising instructions which, when executed by a processor of a device, cause the device to perform the method of any of claims 12 to 14.
